# EUROPEAN PATENT APPLICATION

(11) **EP 2 762 454 A1**
(43) Date of publication of application: **06.08.2014**
(21) Application number: 12834882.8
(22) Date of filing: 14.03.2012
(51) Int. Cl.: C02F 3/00, B01D 53/38, B01D 53/81, C02F 3/28

(54) **WASTEWATER TREATMENT TANK WITHOUT MECHANICAL POWER AND WITHOUT ELECTRIC POWER SOURCE**

(30) Priority: 29.09.2011 JP 2011229253
(71) Applicant: Kansaikako Co. Ltd., Osaka 564-0052 (JP)
(72) Inventor: YOGO, Syun, Suita-shi Osaka 564-0052 (JP); INOUE, Masayuki, Suita-shi Osaka 564-0052 (JP)
(74) Representative: HOFFMANN EITLE
(86) International application number: PCT/JP2012/057253
(87) International publication number: WO 2013/046756

(57) **Abstract**

Provided is a wastewater treatment tank for treating human waste discharged from toilets as well as grey water discharged from kitchens, bathrooms, washrooms, and washing machines before flowing out without using an air supply device that requires an electric power source, without mechanical power, and without an electric power source.

The wastewater treatment tank has an anaerobic tank (2) and is provided with an inspection opening (11) for inspecting the tank. The anaerobic tank (2) is filled with large cylindrical doughnut-shaped articles (3a) and small articles (3b) that are typical reticular framework filter media, and BOD in human waste and grey water can be removed by means of anaerobic microorganisms developed in this filter media. In addition, (3a) and (3b), typical type of reticular framework filter media, have a net-like woven structure and this structure can trap and remove suspended solids contained in the human waste and the grey water.

## Description

### Technical Field

The present invention is used as a wastewater treatment tank for treating human waste discharged from toilets and grey water discharged from kitchens, bathrooms, washrooms and washing machines before flowing out.

### Background Art

Conventional tanks for treating and discharging human waste discharged from toilets and grey water discharged from kitchens, bathrooms, washrooms and washing machines have been septic tanks just for storing the human waste and the grey water temporarily.

The septic tanks just temporarily store the human waste and the grey water, which are discharged without treating and have caused environmental pollution of rivers, ponds, lakes, marshes and the sea.

The human waste and the grey water contain microorganisms such as pathogenic Escherichia coli harmful to the environment and the human body, which are not disinfected in the septic tanks and are discharged into rivers, ponds, lakes, marshes and the sea negatively affecting the environment and the human body.

The human waste and the grey water decay in whole or in part emitting a putrid odour while they are temporarily stored in the septic tanks, causing a bad smell around them.

Many of the septic tanks are made of FRP or concrete, can only be built by skilled manufacturing engineers, and can not be mass-produced. Even products made by skilled manufacturing engineers sometimes have holes or cracks causing water leakage.

### Summary of Invention

### Technical Problems

The conventional septic tank for just temporarily storing human waste discharged from toilets and grey water discharged from kitchens, bathrooms, washrooms and washing machines has no function to treat the human waste and the grey water, and discharging them without treatment has caused environmental pollution of rivers, ponds, lakes, marshes and the sea.

As the human waste and the grey water containing microorganisms such as pathogenic E. coli which are harmful to the environment and the human body are discharged into rivers, ponds, lakes, marshes and the sea, there have been concerns about adverse effects on the environment and the human body.

The human waste and the grey water decay in whole or in part emitting a putrid odour while they are temporarily stored in the septic tanks, causing a bad smell around them.

Many of the septic tanks are made of FRP or concrete, can only be built by skilled manufacturing engineers and can not be mass-produced. Even products made by skilled manufacturing engineers sometimes have holes or cracks causing water leakage and can not store the human waste and the grey water, impairing its function as a septic tank.

### Solution to Problems

Means for solving these problems are as follows:
The invention proposes a wastewater treatment tank that treats human waste discharged from toilets and grey water discharged from kitchens, bathrooms, washrooms, and washing machines before flowing out, without using an air supply device that requires a power source, doesn't require power and an electric source, has a structure including an anaerobic tank filled with reticular framework filter media and an inspection opening installed for inspecting the tank, and can remove 50 to 80% of BOD and 50 to 80% of suspended solids in human waste and grey water.

The reticular framework filter media filled inside the anaerobic tank of the wastewater treatment tank are suitable for anaerobic microorganisms to live in and grow actively. The grown anaerobic microorganisms remove BOD in human waste and grey water by breaking down organic substances contained in the human waste and the grey water that cause environmental pollution of rivers, ponds, lakes, marshes and the sea.

The reticular framework filter media have a net-like woven structure to trap suspended solids in human waste and grey water. Thus, suspended solids in the human waste and the grey water are trapped and removed by the reticular framework filter media.

A filter tank is installed at the next stage of the anaerobic tank of the wastewater treatment tank so that filter media filled inside the filter tank mixed with porous minerals like zeolite, sand (including pumice), activated carbon, plastic, rubber and so forth also trap suspended solids in human waste and grey water. Thus, suspended solids in the human waste and the grey water which fail to be trapped in the anaerobic tank are trapped and removed by the filter media in the filter tank.

Although the filter media in the filter tank tend to get clogged as they trap more suspended solids leading to slow water flow or no water flow, the filter media are unclogged being washed automatically when they get clogged by any one of the following non-powered automatic washing systems: syphon washing, low-tank washing, over-flow washing or air washing.

A treatment tank is installed next to the filter tank to settle and store suspended solids in this treatment tank even if the suspended solids flow out of the filter tank when the automatic washing system unclogs the filter media in the filter tank.

A disinfection tank is installed just before the effluent outlet of the wastewater treatment tank to eliminate microorganisms including pathogenic E. coli by a chlorine agent filled in a cylinder type container installed inside the disinfection tank.

An injection-moulded product made from resin materials including polypropylene, polyethylene, polyacetal, nylon, dicyclopentadiene is used as an outer tank of the wastewater treatment tank, and additionally, injection-moulded products made from the same kinds of resin materials are used for partition panels dividing each tank in the wastewater treatment tank and for parts attached to each tank.

A soil layer is placed covering the top surface of the wastewater treatment tank so that microorganisms living in the soil break down odour-causing components when the odour developed inside the wastewater treatment tank passes through the soil layer.

### Advantageous Effects of Invention

Using the wastewater treatment tank of the present invention, anaerobic microorganisms break down organic substances in human waste discharged from toilets and grey water discharged from kitchens, bathrooms, washrooms and washing machines and remove 50 to 80% of BOD. This helps to prevent environmental pollution of rivers, ponds, lakes, marshes and the sea.

The reticular framework filter media filled inside the anaerobic tank and the filter media mixed with porous minerals such as zeolite, sand (including pumice), activated carbon, plastic, rubber and so forth filled inside the filter tank trap the suspended solids in the human waste and the grey water, and remove 50 to 80% of the suspended solids. This also helps to prevent environmental pollution of rivers, ponds, lakes, marshes and the sea.

Furthermore, even when the filter media in the filter tank get clogged with the suspended solids, they are unclogged automatically by any one of the following non-powered automatic washing systems: syphon washing, low-tank washing, over-flow washing or air washing, and suspended solids can be trapped consistently. Thus, 50 to 80% of the suspended solids are constantly removed and this helps to prevent environmental pollution of rivers, ponds, lakes, marshes and the sea continuously.

As a treatment tank is installed next to the filter tank, the suspended solids can be settled and stored even if they flow out of the filter tank when the filter media in the filter tank are unclogged by the automatic washing system. Thus, more suspended solids are removed and this helps to prevent environmental pollution of rivers, ponds, lakes, marshes and the sea.

As a cylinder type container filled with a chlorine agent is installed inside the disinfection tank just before the effluent outlet of the wastewater treatment tank, the agent eliminates microorganisms including pathogenic E. coli. This inhibits these microorganisms from being discharged to the outside of the wastewater treatment tank and helps to prevent adverse effects on the environment and the human body.

Using an injection-moulded product made from resin materials including polypropylene, polyethylene, polyacetal, nylon, dicyclopentadiene for the outer tank of this wastewater treatment tank, and additionally, using injection-moulded products made from the same kinds of resin materials for partition panels dividing each tank in the wastewater treatment tank and for parts attached to each tank, free from holes or cracks that cause water leakage, anyone can mass-produce the wastewater treatment tanks and supply them consistently.

As a soil layer is placed covering the top surface of this wastewater treatment tank, microorganisms living in the soil break down odour-causing components when the odour developed inside the wastewater treatment tank passes through the soil layer, and the wastewater treatment tank can be installed without concern for a bad smell around the tank.

### Brief Description of Drawings

Fig. 1 shows a wastewater treatment tank of the present invention with a structure having an anaerobic tank.
Fig. 2 shows a wastewater treatment tank of the present invention with a structure having a filter tank at the next stage of the anaerobic tank.
Fig. 3 shows a wastewater treatment tank of the present invention with a structure having a filter tank at the next stage of the anaerobic tank and a treatment tank next to the filter tank.
Fig. 4 shows a wastewater treatment tank of the present invention with a structure having a filter tank at the next stage of the anaerobic tank, a treatment tank next to the filter tank and a disinfection tank at the next stage of the treatment tank.
Fig. 5 shows large and small reticular framework filter media used as the filling in the anaerobic tank for the wastewater treatment tank of the present invention.

### Description of Embodiments

The present invention is used as a wastewater treatment tank for treating human waste discharged from toilets and grey water discharged from kitchens, bathrooms, washrooms and washing machines before flowing out.

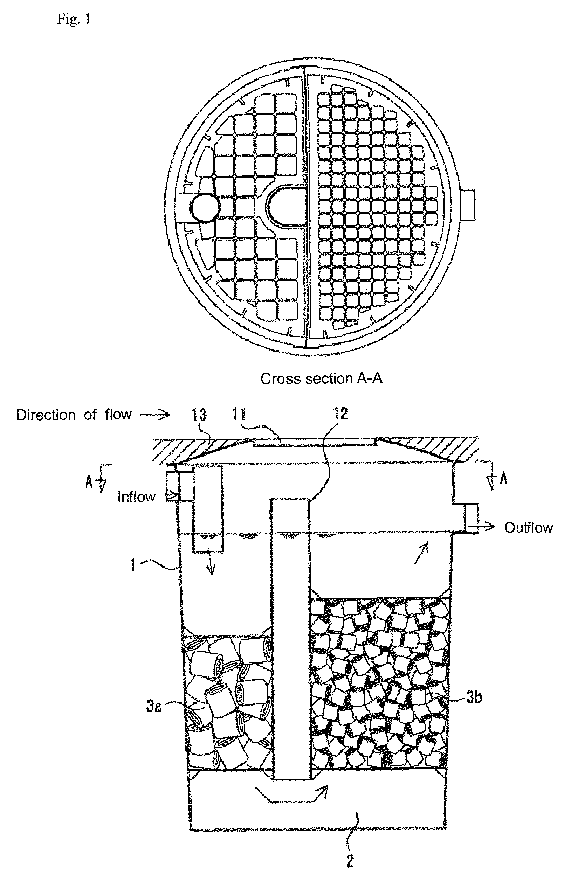

Fig. 1 shows a wastewater treatment tank of the present invention with a structure having an anaerobic tank 2 and an inspection opening 11 for inspecting the tank. Large 3a and small 3b doughnut-shaped cylinders that are typical reticular framework filter media are filled inside the anaerobic tank 2, being suitable for anaerobic microorganisms to live in and grow actively. The anaerobic microorganisms break down organic substances contained in human waste and grey water that cause pollution of rivers, ponds, lakes, marshes and the sea and remove BOD in the human waste and the grey water.

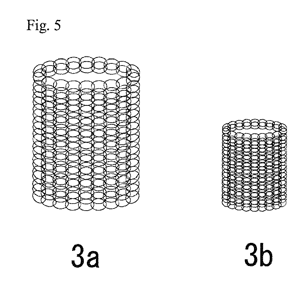

Typical reticular framework filter media, 3a and 3b, have a net-like woven structure as shown in Fig. 5 for trapping suspended solids in human waste and grey water. Thus, suspended solids in the human waste and the grey water can be removed.

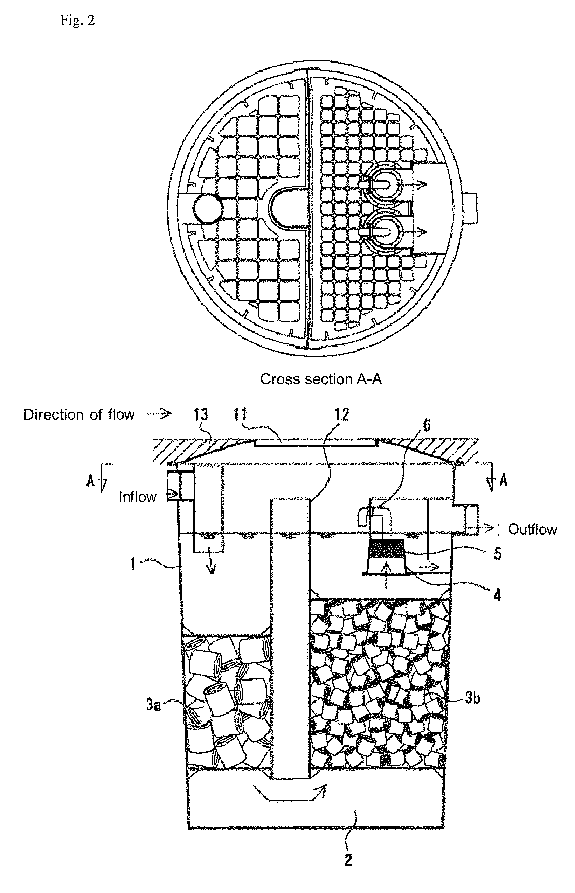

Fig. 2 shows a wastewater treatment tank of the present invention with a structure having the filter tank 4 at the next stage of the anaerobic tank 2 and the inspection opening 11 for inspecting the tanks. The structure of the anaerobic tank 2 is the same as the one shown in Fig. 1; and the filter tank 4 is filled with filter media 5 mixed with porous minerals like zeolite, sand (including pumice), activated carbon, plastic, rubber and so forth; and the filter media trap suspended solids contained in human waste and grey water. Thus, suspended solids in the human waste and the grey water which fail to be trapped in the anaerobic tank can be removed.

Meanwhile the filter media 5 filled inside the filter tank 4 tend to get clogged as they trap more suspended solids, leading to slow water flow or no water flow. By means of a non-powered automatic washing system 6, the filter media 5 are washed automatically when they get clogged and then, the filter media 5 are unclogged. Thus, the filter media 5 filled inside the filter tank 4 can consistently remove suspended solids in human waste and grey water.

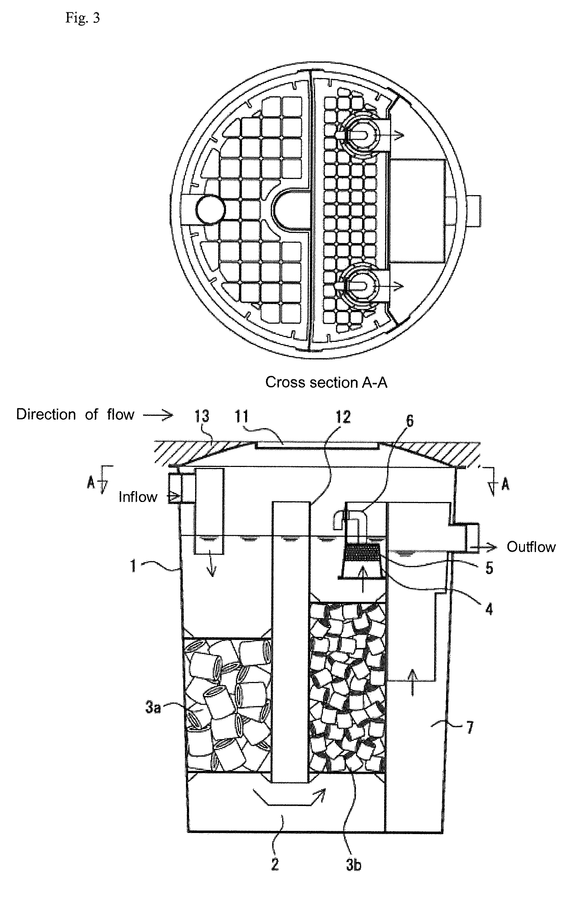

Fig. 3 shows a wastewater treatment tank of the present invention with a structure having the filter tank 4 at the next stage of the anaerobic tank 2, a treatment tank 7 next to the filter tank 4 and the inspection opening 11 for inspecting the tanks. The structure of the anaerobic tank 2 is the same as the one shown in Fig. 1 and the structure of the filter tank 4 is the same as the one shown in Fig. 2. Regarding the treatment tank 7, even if suspended solids flow out of the filter tank 4 when the filter media 5 in the filter tank 4 are unclogged by the non-powered automatic washing system 6, the suspended solids are settled and stored in the treatment tank 7. Thus, even if the suspended solids, which cause the clogging of the filter media 5 in the filter tank 4, flow out of the filter tank 4, they can be removed by the treatment tank 7.

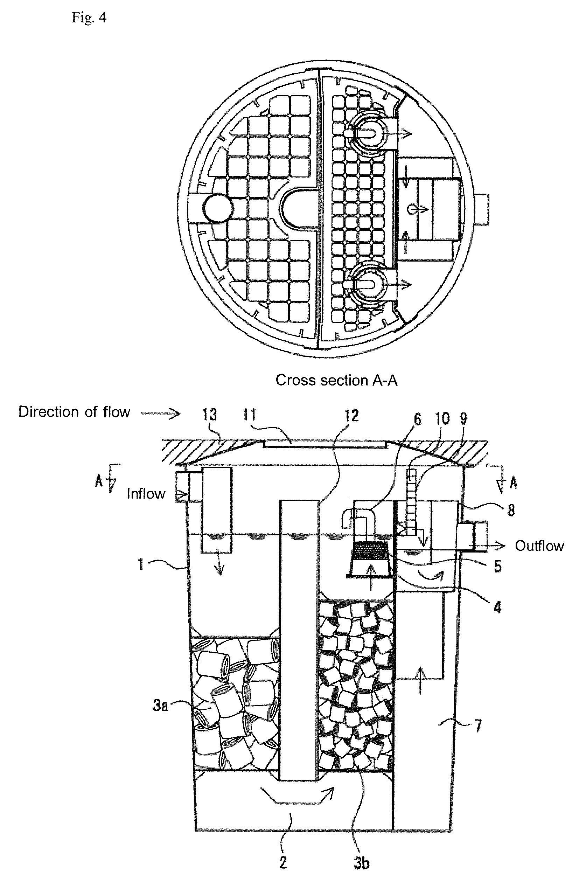

Fig. 4 shows a wastewater treatment tank of the present invention with a structure having the filter tank 4 at the next stage of the anaerobic tank 2, the treatment tank 7 next to the filter tank 4, a disinfection tank 8 at the next stage of the treatment tank 7 and the inspection opening 11 for inspecting the tanks. The structure of the anaerobic tank 2 is the same as the one shown in Fig. 1; the structure of the filter tank 4 is the same as the one shown in Fig. 2; and the structure of the treatment tank 7 is the same as the one shown in Fig. 3. A cylinder type container 9 is installed inside the disinfection tank 8, filled with a chlorine agent 10 which is dissolved by contact with the human waste and the grey water flowed from the treatment tank 7 and eliminates microorganisms including pathogenic E. coli contained in the human waste and the grey water. This inhibits these microorganisms from being discharged outside the wastewater treatment tank and helps to prevent adverse effects on the environment and the human body.

The wastewater treatment tank main body 1, the anaerobic tank 2, the filter tank 4, the treatment tank 7, the disinfection tank 8 and the partition panel with a sludge withdrawal opening 12, shown in Fig. 1, Fig. 2, Fig. 3 and Fig. 4 are injection moulded products made from resin materials including polypropylene, polyethylene, polyacetal, nylon, dicyclopentadiene, free from holes or cracks that cause water leakage, making it possible for anyone to mass-produce the wastewater treatment tanks and supply them consistently. Regarding the soil layer 13 covering the top surface of the wastewater treatment tank shown in Fig. 1, Fig. 2, Fig. 3 and Fig. 4, odour-causing components are broken down by the microorganisms living in the soil layer 13 when the odour developed inside the wastewater treatment tank main body 1 passes through the soil layer 13. Thus, a bad smell around the tank is prevented. 8

### Industrial Applicability

In the field of treating human waste discharged from toilets and grey water discharged from kitchens, bathrooms, washrooms and washing machines before flowing out, the wastewater treatment tank is implemented easily because it doesn't need mechanical power and an electric power source, thus, produces no monthly electric cost and can be installed even at a site where it is difficult to provide an electric power supply.

### Reference Numerals List

1: wastewater treatment tank main body
2: anaerobic tank
3a: one of large doughnut-shaped cylinders that are reticular framework filter media filled in the anaerobic tank
3b: one of small doughnut-shaped cylinders that are reticular framework filter media filled in the anaerobic tank
4: filter tank
5: filter media filled in the filter tank
6: automatic washing system working when filter media are clogged
7: treatment tank
8: disinfection tank
9: cylinder type container filled with a chemical agent
10: chlorine agent
11: inspection opening
12: partition panel with a sludge withdrawal opening
13: soil layer

## Claims

1. A wastewater treatment tank for treating human waste discharged from toilets and grey water discharged from kitchens, bathrooms, washrooms, and washing machines before flowing out, without using air supply device requiring an electric power source, without mechanical power, and without an electric power source, comprising:
a structure including an anaerobic tank filled with reticular framework filter media and an inspection opening installed for inspecting the tank to remove 50 to 80% of BOD and 50 to 80% of suspended solids in the human waste and the grey water.

2. The wastewater treatment tank according to claim 1, further comprising:
a filter tank at a next stage of said anaerobic tank, filled with filter media made from porous minerals like zeolite, pumice, sand, activated carbon, plastic, rubber and so forth, having any one of following non-powered automatic washing systems: syphon washing, low-tank washing, over-flow washing or air washing to unclog the filter media even upon occurrence of clogging.

3. The wastewater treatment tank according to claim 2, further comprising:
a treatment tank next to said filter tank to settle and store the suspended solids flowed into the treatment tank during automatic washing of the filter tank.

4. The wastewater treatment tank according to claim 1, 2 or 3, further comprising:
a disinfection tank at the next stage of said anaerobic tank, said filter tank or said treatment tank, having a cylinder type container filled with a chlorine agent in the disinfection tank to eliminate Escherichia coli in the disinfection tank.

5. The wastewater treatment tank according to any of claims 1 to 4, wherein used is an injection moulded outer tank made from a resin material including polypropylene, polyethylene, polyacetal, nylon, dicyclopentadiene and so forth; additionally, used are injection-moulded products made from same kinds of resin materials for partition panels dividing each tank in the wastewater treatment tank and other parts attached to each tank.

6. The wastewater treatment tank according to any of claims 1 to 5, wherein a soil layer is set covering the waste water treatment tank's top surface for breaking down odour-causing components to prevent a bad smell.
